(19)

Europäisches
Patentamt

European
Patent Office

Office européen
des brevets

(11)  **EP 2 615 424 B1**

(12)  **EUROPEAN PATENT SPECIFICATION**

(45) Date of publication and mention
of the grant of the patent:
**08.01.2014   Bulletin 2014/02**

(51) Int Cl.:
**G01D 5/244** *(2006.01)*     **G01B 7/00** *(2006.01)*
**G06F 17/16** *(2006.01)*

(21) Application number: **12151124.0**

(22) Date of filing: **13.01.2012**

(54) **Method for supervising the correct function of a periodically modulated sensor controlling the position of a rotating system and controller device for performing this method**

Verfahren zur Überwachung der korrekten Funktion eines periodisch modulierten Sensors zur Steuerung der Position eines rotierenden Systems und Steuerungsvorrichtung zur Durchführung des Verfahrens

Procédé pour la supervision d'une fonction correcte d'un capteur modulé périodique de contrôle de la position d'un système de rotation et dispositif de contrôle pour réaliser ce procédé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.07.2013   Bulletin 2013/29**

(73) Proprietor: **SICK STEGMANN GmbH
78166 Donaueschingen (DE)**

(72) Inventor: **Francescon, Massimo
10132 Torino (IT)**

(74) Representative: **Patentanwälte
Westphal, Mussgnug & Partner
Am Riettor 5
78048 Villingen-Schwenningen (DE)**

(56) References cited:
**EP-A2- 2 154 487          DE-A1- 4 413 098
DE-A1-102009 024 021    FR-A1- 2 910 961
GB-A- 2 330 889             US-A1- 2002 183 909**

EP 2 615 424 B1

**Description**

Periodically modulated sensors, especially periodically modulated capacitive sensors, controlling the position of a rotating system are known e.g. from EP 1 538 422 B1. They are usually based on two differential excitation signals that provide the periodic modulations in quadrature which are combined by the sensor depending on the angle to be measured to a sensor signal. Usually, the signal is amplified and converted into the digital domain, leading to a time discrete signal $a_i$. By application of digital algorithms involving bandpass filtering and performing a discrete Fourier transform on a series of thus obtained time discrete signals is converted to a complex number m, whose phase corresponds to the angular position of the rotating system that is the aim of the measurement, whereas the amplitude depends on other physical parameters of the system and is essentially constant unless axial displacement of the sensor rotor occurs. In practice, m is represented by its components along two orthogonal axes that essentially correspond to the cosine and the sine of the angle to be measured in an ideal case.

In general, whenever a sensor is used in a safety-related application, it is of crucial importance to supervise the correct function of the sensor. Ideally, it should be possible to check correctness and functionality of the sensor on-line. In the state of the art, this is achieved by adding diagnostic features to a sensor, i.e. means that supervise the functionality of the respective sensor components.

However, the addition of such diagnostic features is expensive and cumbersome. In GB 2330889A a plausibility check is performed by forming an estimated value from other measured values of different parameters and comparing this estimated value with the measured value. In DE4413098 A1 an expected value for a first sensor is based on measurement of an additional sensor. In US2002/183909 a plausibility-check is performed based on a control measurement between two measurements. Accordingly, the problem addressed by this invention is providing a method for controlling the correct function of a capacitive sensor supervising the position of a rotating system that does not require additional diagnostic features.

This problem is solved by am method with the features of claim 1 and a controller device for performing this method with the features of claim 6. Advantageous embodiments of the method and the device are obtained by the features of the respective dependent claims.

The method for supervising the correct function of a periodically modulated sensor controlling the position of a rotating system according to the invention comprises the steps of

a) determining a response $\vec{g_I} = (g_{ci}, g_{si})$ of the periodically modulated sensor,
b) determining the inverse $K=W^{-1}$ of a 2x2 matrix W describing gains and rotations induced by a digital signal processing routine applied to the raw sensor data to extract the position data,
c) determining the complex number $m=m_{cos}+im_{sin}$ obtained by processing a raw sensor data value $a_i$ corresponding to a first position of the rotating system with the digital signal processing routine,
d) calculating an estimate $a'_i$ for the next raw sensor data value $a_{i+1}$ based on the formula

$$a'_i = g_i K \vec{m} \quad (1)$$

where $\vec{m} = \begin{pmatrix} m_{cos} \\ m_{sin} \end{pmatrix}$, and

e) comparing the estimate and the next raw sensor data value and creating an alert if the result of this comparison exceeds a predetermined value.

A key feature of periodically modulated sensors controlling the position of a rotating system in general and especially of periodically modulated capacitive sensors is that they are typically driven with periodic modulation functions that have a significantly higher frequency than the frequency of the rotating system and with as small a signal lag as possible. As a consequence, the position data (i.e. usually the angular position of or phase information on the rotating system) are updated at points of time, between which the controlled position of the rotating system has changed only by a small amount and, accordingly, the output obtained from the sensor is not expected to be subject to drastic changes, but changing only slowly.

The key concept of the invention is based on the insight that as a consequence of this behavior, it should be possible to construct a black box model of the sensor and use data obtained as result of the preceding sensor data and their subsequent processing as input for the black box model so that the model provides an expected result obtained from the next sensor data. If the sensor continues to work as designed, this expected result obtained from the black box model based on the processed result of the last measurement should be a good approximation of the measured result of the next measurement, because of the expected slow change of the output obtained from subsequent measurements. A big deviation between expected result and processed result, which is readily determined by comparing these results, is indicative of a sensor failure and can be used to trigger a security alert. The threshold for acceptable deviations is dependent on the properties of the rotating system to be controlled using the sensor and the fre- , quency of the periodic modulation functions driving the sensor that essentially determine the update rate for measured sensor data.

The black box model is constructed during steps a) and b) of the method, which usually need to be performed only once unless the rotating system or sensor operating conditions (e.g. the periodic modulation functions used) are changed. The construction of the black box model is discussed in more detail below. Once the black box model has been constructed and a first measured sensor data value is available, steps c), d) and e) may be repeated for each further measured sensor data value.

In a preferred embodiment of the invention, the 2x2 matrix K is determined by determination of a set of numbers $k_{11}$, $k_{12}$, $k_{21}$, $k_{22}$ so that the combination of $k_{11}g_{ci}$ and $k_{21}g_{si}$ called $h_{ci}$ leads to $\vec{m} = \begin{pmatrix} 1 \\ 0 \end{pmatrix}$ and that the combination of $k_{21}g_{ci}$ and $k_{22}g_{si}$ called $h_{si}$ leads to $\vec{m} = \begin{pmatrix} 0 \\ 1 \end{pmatrix}$ and setting $K = \begin{pmatrix} k_{11} & k_{12} \\ k_{21} & k_{22} \end{pmatrix}$, so that

$$\vec{h_i} = (h_{ci}, h_{si}) = \vec{g_i}K = \vec{g_i}\begin{pmatrix} k_{11} & k_{12} \\ k_{21} & k_{22} \end{pmatrix} = (g_{ci}k_{11} + g_{si}k_{21}, g_{ci}k_{12} + g_{si}k_{22}) \quad (2).$$

In other words, after the determination of the response $\vec{g_i} = (g_{ci}, g_{si})$ of the sensor, which may e.g. be done by measurement when just one excitation signal is driven, the coordinate system in which the estimate $a'_i$ is calculated is changed in such a way that the calculation of the estimate requires a smaller number of operations at runtime, as $a'_i = \vec{g_i}K\vec{m} = \vec{h_i}\vec{m}$. This is important, because the high rate of measurements to be processed requires that the estimate is known as quickly as possible.

In another preferred embodiment of the method that also contributes to the possibility to provide the estimate as quickly as possible, raw output of the discrete Fourier transform is used as input data for step d). However, it turns out that this can cause a small systematic error proportional to the rotation speed for the calculated estimate, because the thus obtained sine and cosine signals contain demodulation terms with double frequency of the frequency of the periodic modulation function used for excitation of the sensor. The estimator essentially performs a further modulation operation, which reflects these terms back into the base band. Therefore, it is advantageous to filter either the input data for the estimator or the output data of the estimator.

The ideal way to filter is a notch filter that is applied to both the sine and the cosine input data. A much cheaper possibility that leads to good results is using a high pass filter on the output. The threshold frequency for the high pass filter should be chosen to be lower than the frequency of the periodic modulation function.

The controller device according to the invention comprises a periodically modulated sensor, a signal generator for providing periodic excitation functions for the periodically modulated sensor and a data processing device for performing a discrete Fourier transform on data provided by the sensor and for filtering of data provided by the sensor.

Furthermore, according to the invention the controller device further also comprises an estimator device for calculating an estimate $a'_i$ for the next raw sensor data value $a_{i+i}$ based on the formula $a'_i = g_i K\vec{m}$, where $\vec{m} = \begin{pmatrix} m_{cos} \\ m_{sin} \end{pmatrix}$ is the vector representation of complex number $m = m_{cos} + im_{sin}$ obtained by processing a raw sensor data value $a_i$ corresponding to a first position of the rotating system with the digital signal processing routine, $\vec{g_i} = (g_{ci}, g_{si})$ represents a response of the sensor and $K = W^{-1}$ is the inverse of a 2x2 matrix W describing gains and rotations induced by a digital signal processing routine applied to the raw sensor data to extract the position data.

In a preferred embodiment of the controller device that leads to more reliable data, the controller device comprises amplification means for amplifying the raw output data of the sensor output.

In another preferred embodiment, the controller device comprises A/D conversion means for providing digitalized input data to the data processing device.

In general, the data processing device and/or the estimator device may be realized by hardware-based circuitry or, alternatively, be realized by software executed by a CPU. A software-based realization both the data processing device and the estimator device is attractive because it allows for the cheap addition of the estimator relying essentially on hardware that is already present.

The reliability of the estimate used by the controller device to supervise the proper function of the sensor can be increased if the controller device comprises filtering means for filtering the input data provided to the estimator device and/or for filtering the output data of the estimator.

Next, the invention is explained in more detail using a figure showing a block diagram of a periodically modulated sensor system according to an embodiment of the invention. The figure shows

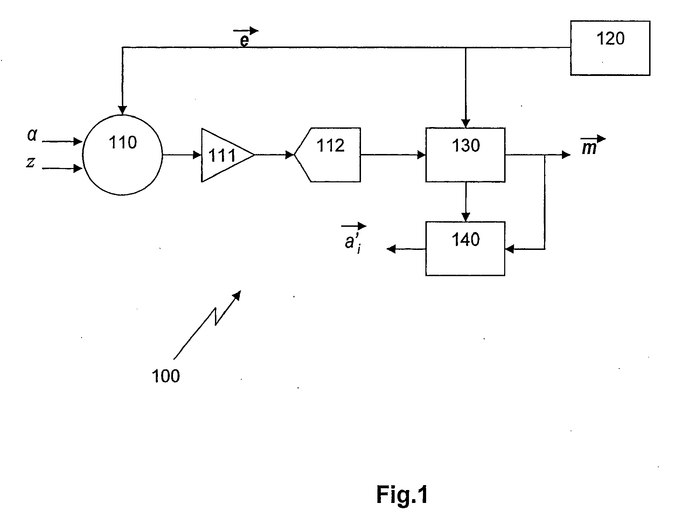

Fig. 1: a controller device for supervising the correct function of a periodically modulated capacitive sensor controlling the position of a rotating system by the method according to the invention.

The controller device 100 shown in Figure 1 comprises a periodically modulated sensor 110 realized as a periodically modulated capacitive sensor, a signal generator 120 for providing periodic excitation functions for the periodically modulated sensor 110, a data processing device 130 for performing a discrete Fourier transform on data provided by the sensor and for filtering of data provided by the sensor and an estimator device 140 for calculating an estimate $a'_i$ for the next raw sensor data value $a_{i+1}$. Furthermore, the controller device 100 comprises amplification means 111 for amplifying the raw output data of the sensor that can be realized e.g. as amplifier and A/D conversion means 112 that may be realized as A/D converter providing digitalized input data to the data processing device 130.

Figure 1 can also be used to explain the black box model that is created according to the invention in more detail. As indicated in Figure 1, three variables are relevant for the value that is measured by the periodically modulated sensor 110, especially if the periodically modulated sensor 110 is a capacitive rotation sensor: the current position $\alpha$ (specifically angle or phase) of the rotating system, the axial displacement $\bar{z}$ of the rotor of the periodically modulated sensor 110, and the periodic modulation function that is used as excitation $\vec{e}$. As the modulation function is periodic and time discrete - preferably created by combination of four time discrete periodic signals with period P that are shifted relative to each other by P/4-, it may be described in terms of a complexvalued function $\vec{e} = \begin{pmatrix} e_{ci} \\ e_{si} \end{pmatrix}$.

Accordingly, the complex output value $a_i$ of the periodically modulated sensor 110 for a given data sampling i can be written as $a_i = S(\alpha, z, \vec{e})$, where S is the sensor function describing the dependence of the output of the periodically modulated sensor 110 on the three variables mentioned above.

In order to arrive at the result $\vec{m} = \begin{pmatrix} m_{cos} \\ m_{sin} \end{pmatrix}$ that is used for the extraction of the desired position data, specifically angle or phase, from the raw sensor data represented by $a_i$, filtering and an operation of discrete Fourier transform type, whose roots are advantageously also provided by the signal generator 120, are performed. These actions may be summarized in terms of a digital algorithm function D acting on $a_i$. Accordingly,

$$\vec{m} = \begin{pmatrix} m_{cos} \\ m_{sin} \end{pmatrix} = D(a_i) = D(S(\alpha, z, \vec{e})) \quad (3)$$

A periodically modulated sensor 110, specifically if it is a capacitive rotation sensor, acts mainly as a modulator. This means that the sensor function $S(\alpha, z, \vec{e})$ can be defined more precisely, leading to the relation

$$a_i = S(\alpha, z, \vec{e})) = F(z)(g_{ci} \cos \alpha + g_{si} sin\alpha) = (g_{ci}A_c + g_{si}A_s) = \vec{g_i}\vec{A} \quad (4),$$

where $\vec{g_i} = (g_{ci}, g_{si})$ represents the response of the physical system to the excitation, which can be measured when just one excitation signal is driven. Because linearity and time invariance are given, these functions are also periodical and shifted by one quarter of a period.

Next, the effects of the digital algorithm function are analyzed. The discrete Fourier transform is a linear and time-invariant operation that leads to a demodulation of the signal it is applied to in two orthogonal components. Analog and digital filtering may lead to gains and phase rotations. The generical form to describe these operations is a matrix W, which yields:

$$\vec{m} = \begin{pmatrix} m_{cos} \\ m_{sin} \end{pmatrix} = W \begin{pmatrix} A_c \\ A_s \end{pmatrix} = W\vec{A} \quad (5).$$

Once the matrix W is determined, its inverse K=W$^{-1}$ can be determined and applied to equation 5 from the left hand side, leading to $K\vec{m} = W^{-1}W \begin{pmatrix} A_c \\ A_s \end{pmatrix} = \vec{A}$. As mentioned above, $\vec{g_l} = (g_{ci}, g_{si})$ can be measured when just one excitation signal is driven and thus a$_{i+1}$ can be calculated using formula (4) if the periodically modulated sensor 110 is read at a sufficiently high frequency to justify the assumption that $\vec{m}$ does change significantly between two readings of the sensor output value.

Reference numerals

| | |
|---|---|
| 100 | controller device |
| 110 | periodically modulated sensor |
| 111 | amplification means |
| 112 | A/D conversion means |
| 120 | internal signal generator |
| 130 | data processing circuit |
| 140 | estimator device |

**Claims**

1. Method for supervising the correct function of a periodically modulated sensor (110) controlling the position of a rotating system, said method comprising the steps of

   a) determining a response $\vec{g_l} = (g_{ci}, g_{si})$ of the periodically modulated sensor (110),
   b) determining the inverse K=W$^{-1}$ of a 2x2 matrix W describing gains and rotations induced by a digital signal processing routine applied to the raw sensor data to extract the position data,
   c) determining the complex number m=m$_{cos}$+im$_{sin}$ obtained by processing a raw sensor data value a$_i$ corresponding to a first position of the rotating system with the digital signal processing routine,
   d) calculating an estimate a'$_i$ for the next raw sensor data value ai+i based on the formula $a'_i = g_i K\vec{m}$, where

   $$\vec{m} = \begin{pmatrix} m_{cos} \\ m_{sin} \end{pmatrix},$$

   and
   e) comparing the estimate and the next raw sensor data and creating an alert if the result of this comparison exceeds a predetermined value.

2. Method according to claim 1,
   **characterized in that** the 2x2 matrix K is determined by determination of a set of numbers k$_{11}$, k$_{12}$, k$_{21}$, K$_{22}$ so that the combination of k$_{11}$g$_{ci}$ and k$_{21}$g$_{si}$ called h$_{ci}$ leads to $\vec{m} = \begin{pmatrix} 1 \\ 0 \end{pmatrix}$ and that the combination of k$_{21}$g$_{ci}$ and k$_{22}$g$_{si}$ called h$_{si}$ leads to $\vec{m} = \begin{pmatrix} 0 \\ 1 \end{pmatrix}$ and setting $K = \begin{pmatrix} k_{11} & k_{12} \\ k_{21} & k_{22} \end{pmatrix}$, so that

   $$\vec{h_l} = (h_{ci}, h_{si}) = \vec{g_l}K = \vec{g_l}\begin{pmatrix} k_{11} & k_{12} \\ k_{21} & k_{22} \end{pmatrix} = (g_{ci}k_{11} + g_{si}k_{21}, g_{ci}k_{12} + g_{si}k_{22})$$

3. Method according to claim 1 or 2,

**characterized in that** the raw output of the discrete Fourier transform is used as input data for step d).

4. Method according to claim 3,
   **characterized in that** the input data for step d) are filtered using a notch filter.

5. Method according to claim 3,
   **characterized in that** the calculated estimate is filtered using a high pass filter.

6. Controller device (100) for performing the method according to one of claims 1 to 5, said controller device (100) comprising a periodically modulated sensor (110), a signal generator (120),for providing periodic excitation functions for the periodically modulated sensor (110) and a data processing device (130) for performing a discrete Fourier transform on data provided by the sensor and for filtering of data provided by the periodically modulated sensor (110), **characterized in that** the controller device (100) further comprises an estimator device (140) for calculating an estimate $a'_i$ for the next raw sensor data value $a_{i+i}$ based on the formula $a'_i = g_i K \vec{m}$, wherein $\vec{m} = \begin{pmatrix} m_{cos} \\ m_{sin} \end{pmatrix}$ is the vector representation of complex number $m = m_{cos} + i m_{sin}$ obtained by processing a raw sensor data value $a_i$ corresponding to a first position of the rotating system with the digital signal processing routine, $\vec{g_l} = (g_{ci}, g_{si})$ represents a response of the sensor and $K = W^{-1}$ is the inverse of a 2x2 matrix W describing gains and rotations induced by a digital signal processing routine applied to the raw sensor data to extract the position data.

7. Controller device (100) according to claim 6,
   **characterized in that** the controller device (100) comprises amplification means (111) for amplifying the raw output data obtainable from the periodically modulated sensor (110).

8. Controller (100) device according to claim 6 or 7,
   **characterized in that** the controller device (100) comprises A/D conversion means (112) for providing digitalized input data to the data processing device.

9. Controller device(100) according to one of claims 6 to 8,
   **characterized in that** the controller device (100) comprises filtering means for filtering the input data provided to the estimator device (140) and/or for filtering the output data of the estimator device (140) .

**Patentansprüche**

1. Verfahren zur Überwachung der korrekten Funktion eines periodisch modulierten Sensors (110), der die Position eines rotierenden Systems steuert, wobei das Verfahren die Schritte umfasst

   a) Bestimmen einer Reaktion $\vec{g_l} = (g_{ci}, g_{si})$ des periodisch modulierten Sensors (110),
   b) Bestimmen des Kehrwertes $K = W^{-1}$ einer 2 x 2-Matrix W, die Verstärkungen und Rotationen beschreibt, die von einer digitalen Signalverarbeitungsroutine induziert werden, die auf die Rohsensordaten angewandt wird, um die Positionsdaten zu extrahieren,
   c) Bestimmen der komplexen Zahl $m = m_{cos} + i m_{sin}$, die durch Verarbeiten eines Rohsensordatenwertes $a_i$ erhalten wird, der einer ersten Position des rotierenden Systems entspricht, mit der digitalen Signalverarbeitungsroutine,
   d) Berechnen eines Schätzwertes $a'_i$ für den nächsten Rohsensordatenwert $a_{i+1}$, basierend auf der Formel $a'_i = g_i K \vec{m}$, wo

   $$\vec{m} = \begin{pmatrix} m_{cos} \\ m_{sin} \end{pmatrix}, \text{ und}$$

   e) Vergleichen des Schätzwertes und der nächsten Rohsensordaten und Erzeugen eines Alarms, wenn das Ergebnis dieses Vergleichs einen vorbestimmten Wert übersteigt.

2.
   Verfahren nach Anspruch 1,

**dadurch gekennzeichnet, dass** die 2 x 2-Matrix K durch Bestimmen einer Reihe von Zahlen $k_{11}$, $k_{12}$, $k_{21}$, $k_{22}$, so dass die Kombination von $k_{11}g_{ci}$ und $k_{21}g_{si}$, genannt $h_{ci}$, zu $\vec{m} = \begin{pmatrix} 1 \\ 0 \end{pmatrix}$ führt, und dass die Kombination von $k_{21}g_{ci}$ und $k_{22}g_{si}$, genannt $h_{si}$, zu $\vec{m} = \begin{pmatrix} 0 \\ 1 \end{pmatrix}$ führt, und Einstellen von $K = \begin{pmatrix} k_{11} & k_{12} \\ k_{21} & k_{22} \end{pmatrix}$, so dass

$$\vec{h_i} = (h_{ci}, h_{si}) = \vec{g_i}K = \vec{g_i} \begin{pmatrix} k_{11} & k_{12} \\ k_{21} & k_{22} \end{pmatrix} = (g_{ci}k_{11} + g_{si}k_{21}, g_{ci}k_{12} + g_{si}k_{22}),$$ bestimmt wird.

3. Verfahren nach Anspruch 1 oder 2,
   **dadurch gekennzeichnet, dass** die Rohausgabe der diskreten Fourier-Transformation als Eingabedaten für Schritt d) verwendet wird.

4. Verfahren nach Anspruch 3,
   **dadurch gekennzeichnet, dass** die Eingabedaten für Schritt d) unter Verwendung eines Sperrfilters gefiltert werden.

5. Verfahren nach Anspruch 3,
   **dadurch gekennzeichnet, dass** der berechnete Schätzwert unter Verwendung eines Hochpassfilters gefiltert wird.

6. Steuervorrichtung (100) zum Durchführen des Verfahrens nach einem der Ansprüche 1 bis 5, wobei die Steuervorrichtung (100) einen periodisch modulierten Sensor (110), einen Signalgenerator (120) zum Bereitstellen periodischer Anregungsfunktionen für den periodisch modulierten Sensor (110) und eine Datenverarbeitungsvorrichtung (130) zum Durchführen einer diskreten Fourier-Transformation an Daten, die von dem Sensor bereitgestellt werden, und zum Filtern von Daten, die von dem periodisch modulierten Sensor (110) bereitgestellt werden, umfasst,
   **dadurch gekennzeichnet, dass** die Steuervorrichtung (100) ferner eine Kalkulatorvorrichtung (140) zum Berechnen eines Schätzwertes $a'_i$ für den nächsten Rohsensordatenwert $a_{i+1}$, basierend auf der Formel $a'_i = g_i K \vec{m}$ umfasst,

   wobei $\vec{m} = \begin{pmatrix} m_{cos} \\ m_{sin} \end{pmatrix}$ die Vektordarstellung der komplexen Zahl $m = m_{cos} + i m_{sin}$ ist, die durch Verarbeiten eines

   Rohsensordatenwertes $a_i$ erhalten wird, der einer ersten Position des rotierenden Systems entspricht, mit der digitalen Signalverarbeitungsroutine, $\vec{g_i} = (g_{ci}, g_{si})$ eine Reaktion des Sensors darstellt und $K = W^{-1}$ der Kehrwert einer 2 x 2-Matrix W ist, die Verstärkungen und Rotationen beschreibt, die von einer digitalen Signalverarbeitungsroutine induziert werden, die auf die Rohsensordaten angewandt wird, um die Positionsdaten zu extrahieren.

7. Steuervorrichtung (100) nach Anspruch 6,
   **dadurch gekennzeichnet, dass** die Steuervorrichtung (100) Verstärkungsmittel (111) zum Verstärken der Rohausgabedaten, die von dem periodisch modulierten Sensor (110) erhältlich sind, umfasst.

8. Steuervorrichtung (100) nach Anspruch 6 oder 7,
   **dadurch gekennzeichnet, dass** die Steuervorrichtung (100) A/D-Wandlungsmittel (112) zum Bereitstellen digitalisierter Eingabedaten für die Datenverarbeitungsvorrichtung umfasst.

9. Steuervorrichtung (100) nach einem der Ansprüche 6 bis 8,
   **dadurch gekennzeichnet, dass** die Steuervorrichtung (100) Filtermittel zum Filtern der Eingabedaten, die der Kalkulatorvorrichtung (140) bereitgestellt werden, und/oder zum Filtern der Ausgabedaten der Kalkulatorvorrichtung (140) umfasst.

**Revendications**

1. Procédé permettant de superviser le fonctionnement correct d'un capteur (110) à modulation périodique commandant la position d'un système rotatif, ce procédé comprenant les étapes consistant à :

   a) déterminer la réponse $\vec{g_t} = (g_{ci}, g_{si})$ du capteur (110) à modulation périodique,

   b) déterminer l'inverse $K = W^{-1}$ d'une matrice 2 x 2 W décrivant les gains et les rotations induites par une routine de traitement d'un signal numérique appliquée aux données du capteur brutes pour extraire des données de position,

   c) déterminer le nombre complexe $m = m_{cos} + im_{sin}$ obtenu en traitant une valeur des données du capteur brutes $a_i$ correspondant à une première position du système rotatif avec la routine de traitement d'un signal numérique,

   d) calculer une estimation $a'_i$ de la valeur des données de capteur brutes $a_{i+1}$ suivante à partir de la formule $a'_i = g_i K \vec{m}$, dans laquelle

$$\vec{m} = \begin{pmatrix} m_{cos} \\ m_{sin} \end{pmatrix},$$

   et

   e) comparer la donnée estimée et la donnée du capteur brute suivante et créer une alerte si le résultat de cette comparaison excède une valeur prédéfinie.

2. Procédé conforme à la revendication 1,
   **caractérisé en ce que**
   la matrice 2 x 2 K est déterminée en déterminant un jeu de nombres $k_{11}$, $k_{12}$, $k_{21}$, $k_{22}$ de sorte que la combinaison de $k_{11}g_{ci}$ et $k_{21}g_{si}$ nommée $h_{ci}$ conduise à $\vec{m} = \begin{pmatrix} 0 \\ 1 \end{pmatrix}$ et que la combinaison de $k_{21}g_{ci}$ et $k_{22}g_{si}$ nommée $k_{si}$ conduise

   à $\quad \vec{m} = \begin{pmatrix} 0 \\ 1 \end{pmatrix} \quad$ et $\quad$ régler $\quad K = \begin{pmatrix} k_{11} & k_{12} \\ k_{21} & k_{22} \end{pmatrix}, \quad$ de $\quad$ sorte $\quad$ que

$$h_i = (h_{ci}, h_{si}) = g_i K = g_i \begin{pmatrix} k_{11} & k_{12} \\ k_{21} & k_{22} \end{pmatrix} = (g_{ci}k_{11} + g_{si}k_{21}, g_{ci}k_{12} + g_{si}k_{22})$$

3. Procédé conforme à la revendication 1 ou 2,
   **caractérisé en ce que**
   la sortie brute de la transformation de Fourier discrète est utilisée entant que donnée d'entrée pour l'étape d).

4. Procédé conforme à la revendication 3,
   **caractérisé en ce que**
   les données d'entrée pour l'étape d) sont filtrées en utilisant un filtre coupe bande.

5. Procédé conforme à la revendication 3,
   **caractérisé en ce que**
   l'estimation calculée est filtrée en utilisant un filtre passe haut.

6. Dispositif de contrôle (100) permettant la mise en oeuvre du procédé conforme à l'une des revendications 1 à 5, comprenant un capteur (110) à modulation périodique, un générateur de signal (120) permettant de fournir des fonctions d'excitation périodique au capteur (110) à modulation périodique et un système de traitement de données (130) permettant d'effectuer une transformation de Fourier discrète de données fournies par le capteur et de filtrer les données fournies par le capteur (110) à modulation périodique,
   **caractérisé en ce que**
   le dispositif de contrôle (100) comporte en outre un dispositif d'estimation (140) permettant de calculer une estimation $a'_i$ de la valeur des données de capteur brutes suivante $a_{i+i}$ à partir de la formule $a'_i = g_i K \vec{m}$,

dans laquelle $\vec{m} = \begin{pmatrix} m_{cos} \\ m_{sin} \end{pmatrix}$ est la représentation vectorielle du nombre complexe m = $m_{cos}$ + i$m_{sin}$ obtenu par le traitement d'une valeur des données du capteur brutes $a_i$ correspondant à une première position du système rotatif avec la routine de traitement de signal numérique, $\vec{g_t}$ = ($g_{ci}$, $g_{si}$) représente la réponse du capteur et K = $W^{-1}$ est l'inverse d'une matrice 2 x 2 W décrivant les gains et les rotations induites par une routine de traitement de signal numérique appliquée aux données du capteur brutes pour extraire des données de position.

**7.** Dispositif de contrôle (100) conforme à la revendication 6,
**caractérisé en ce que**
le dispositif de contrôle (100) comporte des moyens d'amplification (111) permettant d'amplifier les données de sortie brutes pouvant être obtenues à partir du capteur à modulation périodique (110).

**8.** Dispositif de contrôle (100) conforme à la revendication 6 ou 7,
**caractérisé en ce que**
le dispositif de contrôle (100) comporte des moyens de conversion A/D (112) permettant de fournir des données d'entrée numérisées au dispositif de traitement de données.

**9.** Dispositif de contrôle (100) conforme à l'une des revendications 6 à 8,
**caractérisé en ce que**
le dispositif de contrôle (100) comporte des moyens de filtration permettant de filtrer les données d'entrée fournies au dispositif d'estimation (140) et/ou de filtrer les données de sortie du dispositif d'estimation (140).

Fig.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1538422 B1
- GB 2330889 A
- DE 4413098 A1
- US 2002183909 A